# EUROPÄISCHE PATENTSCHRIFT

(11) **EP 0 286 856 B1**
(45) Veröffentlichungstag und Bekanntmachung des Hinweises auf die Patenterteilung: **19.05.1993**
(21) Anmeldenummer: 88104155.2
(22) Anmeldetag: 16.03.1988
(51) Int. Cl.: G06F 11/16

(54) **Fehlertolerante Rechneranordnung**
Fault-tolerant computer arrangement
Système d'ordinateurs à tolérance de fautes

(30) Priorität: 16.04.1987 CH 1503/87
(43) Veröffentlichungstag der Anmeldung: 19.10.1988
(73) Patentinhaber: BBC Brown Boveri AG, CH-5401 Baden (CH)
(72) Erfinder: Kirrmann, Hubert, Dr., CH-5405 Baden (CH)

(56) Entgegenhaltungen:
- EP-A- 0 076 655
- EP-A- 0 081 238
- DE-A- 3 328 405
- FTCS 12th ANNUAL INTERNATIONAL SYMPOSIUM FAULT TOLERANT COMPUTER, Santa Monica, 22.-24. Juni 1982, Seiten 55-62, IEEE, New York, US; J. CHAVADE et al.: "The P.A.D.: A self-checking LSI circuit for fault-detection in microcomputers"

## Beschreibung

### Technisches Gebiet

Die vorliegende Erfindung betrifft eine auf dem sogenannten Duplex-Nebenlauf-Prinzip basierende fehlertolerante Rechneranordnung mit zwei eng gekoppelten, jedoch räumlich separierbaren, identisch aufgebauten, mit übereinstimmenden Programmen geladenen und an gemeinsame oder redundante Eingabekanäle sowie einen gemeinsamen, redundanten Ausgabekanal anschliessbaren Rechnern.

Beim Duplex-Nebenlauf-Prinzip bearbeiten beide Rechner parallel und eng synchronisiert die gleichen Daten nach den übereinstimmenden Programmen. Nur einer der Rechner - der sogenannte Wirkrechner - ist dabei mit dem Ausgabekanal verbunden. Der jeweils andere - der sogenannte Mitrechner - dient nur zu Reserve- oder Kontrollzwecken. Durch Umschaltung auf den Mitrechner kann im Falle eines Fehlers im Wirkrechner eine sog. stetige Funktion der Rechneranordnung sichergestellt werden, vorausgesetzt natürlich, der Mitrechner arbeitet fehlerfrei. Bei kritischen Anwendungen, insbesondere in der Prozessleittechnik, bei denen eine integre Funktion erforderlich ist, d.h. bei denen eine Ausgabe von fehlerhaften Daten unbedingt vermieden werden muss, können die beiden Rechner fortlaufend auf Uebereinstimmung überprüft und bei Auftreten einer Nichtübereinstimmung vom Ausgabekanal abgetrennt werden.

### Stand der Technik

Rechneranordnungen, die nach dem Nebenlauf- bzw. Workby-Prinzip arbeiten, sind am SPS-Markt (SPS = Speicherprogrammierbare Steuerung) durch Produkte der Firmen Siemens (Simatic S5-115F und S5-150H, AS 220H) und Krupp-Atlas (SDR 1300) vertreten. In der Vermittlungstechnik sind das AXE-10-System von Ericcson (B.E. Ossfeld and I. Jonsson, "Recovery and Diagnostics in the Central Control of the AXE Switching System," IEEE Transactions on Computers, June 1980, Vol. C-29 No. 8, pp. 482) und das ESS 1A-System von Bell (Toy, W.N., "Fault-tolerant Design of Local ESS Processors", Proceedings of the IEEE, Vol. 66, No. 10, pp. 1126-1145) bekannt.

Alle diese Rechneranordnungen sind jedoch verdoppelte Einprozessor-Rechner, also keine verdoppelten Multiprozessoren. Dadurch wird ihre Synchronisierung einfacher. Da sie weder mehrfache Prozessoren, DMA-Transfer noch I/O-Prozessoren besitzen, entfällt auch das Problem der Synchronisation der Busvergabe. Auch ist das Problem der Unterbrechung in den bekannten Einrichtungen nicht erwähnt. Dieses Problem wird dadurch umgangen, dass die Rechner Unterbrechnungen nur an definierten Programmstellen berücksichtigen, und überdies nur zyklische Programme abarbeiten.

Ein bekannter redundanter, freiprogrammierbarer Multiprozessor stammt von der Firma Stratus (R. Freiburghouse, "Making Processing fail-safe", Mini-Micro Systems, May 1982). Dort werden die Prozessoren paarweise synchronisiert, indem der gemeinsame Bus verdoppelt und beide Stränge von allen Prozessoren aus zugänglich sind. Dadurch entsteht eine enge Nachbarschaft zwischen den redundanten Rechnern, die in der Prozessleittechnik unerwünscht ist. Um gemeinsame Fehlerquellen auszuschliessen, sollten die redundanten Rechner einige Meter auseinander und vorzugsweise noch durch eine feuerfeste Wand getrennt aufgestellt werden können. Dies ist bei Redundanz innerhalb der gleichen Karte, d.h. bei enger Nachbarschaft, nicht möglich.

Eine ähnliche Struktur ist aus der DE 33 28 405 A1 bekannt. Dabei ist wiederum eine enge Nachbarschaft zwischen den redundanten Teilen vorhanden, die in der Prozessleittechnik nicht annehmbar ist.

Für stetige Anwendungen existiert eine weitere Klasse von fehlertoleranten Rechnern, die beim Ausfall des Wirkrechners ebenfalls einen Ersatzrechner einschalten. Diese weitere Klasse, die auf dem sogenannten Standby-Prinzip beruht, ist auf den ersten Blick von den auf dem Workby-Prinzip beruhenden Anordnungen schwer zu unterscheiden, arbeitet jedoch grundsätzlich verschieden.

Bei Standby-Rechnern wird der Zustand des Wirkrechners oder Teile dieses Zustandes in regelmässigen Abständen zum Ersatzrechner kopiert. Dabei bleibt der Ersatzrechner passiv oder führt andere Arbeiten, wie z.B. die Programmentwicklung, aus. Dieses Verfahren zwingt den Programmierer, in regelmässigen Abständen Rückzugspunkte (Recovery Points, Save Points, Checkpoints) in seine Programme einzuführen, an denen der Zustand des Wirkrechners zum Ersatzrechner übertragen wird. Von diesem Zustand aus wird der Erstazrechner die Verarbeitung nach dem Ausfall wieder aufnehmen können. Dieses Verfahren hat den Nachteil, dass die Umschaltung nicht stossfrei ist, denn der Zustand des Ersatzrechners entspricht dem Zustand des Wirkrechners am Rückzugspunkt, und was jener seither gemacht hat, wird nicht berücksichtigt.

Standby-Rechner bieten überdiese keine Integrität. Aus diesem Grund sind Standby-Rechner für kritische, sicherheitsrelevante Aufgaben nicht geeignet.

Zur Standby-Klasse zählen auch Rechner, die scheinbar ohne explizite Rückzugspunkte funktionieren, und die bei jedem Schreibzugriff gleichzeitig den Speicher des Ersatzrechners beschreiben. Da aber die internen Register des Ersatzrechners dabei nicht nachgeführt werden, sind Rückzugspunkte trotzdem nötig. Solche Rechner sind z.B. der ESS-3A Prozessor von Bell (Toy, W.N., "Fault-tolerant Design of Local ESS Processors", Proceedings of the IEEE, Vol. 66, No. 10, pp. 1126-1145), der 3B20D von AT&T (PCT/US85/00936, IPC: G06F 11/20), und der COPRA-Rechner (Meraud, C, Broways, F., "A new line of ultra-reliable, reconfigurable computers for airborne aerospace applications", AGARD-Symposium, Ottawa, 8-11 May 1979). Aus FTCS 12th ANNUAL INTERNATIONAL SYMPOSIUM FAULT TOLERANT COMPUTER, Santa Monica, 22. - 24. Juni 1982, Seiten 55 - 62, IEEE, New York, US; S. CHAVADE et al.: "The P.A.D.: A self-checking LSI circuit for fault-detection in microcomputers" ist ein als Chip mit 40 Anschlüssen ausgebildeter Baustein P.A.D. bekannt, der zur Synchronisierung der CPUS zweier Mikrorechner einer fehlertoleranten Rechneranordnung verwendet wird. Dieser Baustein ist unmittelbar mit den Bussen beider Rechner verbunden. Andererseits ist er aber direkt mit einem Ein- und Ausgabegerät sowie mit Speichern verbunden. Erst durch diese zusätzlichen Verbindungen ist seine Funktionsfähigkeit gewährleistet.

### Darstellung der Erfindung

Die Erfindung, wie sie in Patentanspruch 1 gekennzeichnet ist, löst die Aufgabe, eine Rechneranordnung der eingangs genannten Art anzugeben, die frei programmierbar ist und bei der die beiden Rechner jeweils Multiprozessoren sind. Die Erfindung zeichnet sich dadurch aus, dass eine rückwirkungsfreie Arbeitsweise einer fehlertoleranten Rechneranordnung erreicht wird, bei der die Rechner jeweils als Multiprozessor ausgebildet sind. Dies wird vor allem dadurch erreicht, dass die Synchronisiereinheit aus zwei identischen Hälften aufgebaut ist. Zudem ist die Rechneranordnung so ausgebildet, dass bei Ausfall einer Komponente der Synchronisiereinheit keiner der Rechner ausfallen würde. Selbst bei Ausfall der Synchronisiereinheit sind die Rechner in der Lage, allerdings ohne Synchronisierung, weiterzuarbeiten.

### Kurze Beschreibung der Zeichnungen

Ein Ausführungsbeispiel der Erfindung wird nachstehend unter Bezugnahme auf die beigefügten Zeichnungen erläutert. Es zeigen
- Fig. 1: in schematischer Darstellung eine Rechneranordnung mit jeweils einem gemeinsamen Bus an den jeweils mehrere Prozessoren angeschlossen sind und einer Synchronisierungseinheit zwischen den Bussen;
- Fig. 2: in zwei Zeitdiagrammen den Ablauf von Schreib- und Lesezyklen in Handshake-Synchronisierung auf dem gemeinsamen Bus der Rechner;
- Fig. 3: in einem Zeitdiagramm den Ablauf einer Arbitration auf dem gemeinsamen Bus;
- Fig. 4: in einem Zeitdiagramm den Ablauf von parallelen Arbitrationen auf den gemeinsamen Bussen beider Rechner, die schliesslich zum gleichen Ergebnis kommen;
- Fig. 5: in einem Zeitdiagramm den Ablauf von parallelen Arbitrationen auf den gemeinsamen Bussen beider Rechner, die nicht zum gleichen Ergebnis kommen und die Destitution der Arbitrationen durch die Synchronisierungseinheit;
- Fig.6-9: jeweils in einer etwa Fig. 1 entsprechenden Darstellung den Datenfluss insbesondere über die Synchronisierungseinheit von einem gemeinsamen Bus zum andern zum Zwecke der Angleichung von Eingangsdaten, von Unterbrechungen und dem Anlernen eines ausgefallenen Rechners nach dessen Reparatur, und schliesslich
- Fig. 10: in schematischer Darstellung den prinzipiellen Aufbau der Synchronisierungseinheit.

### Bester Weg zur Ausführung der Erfindung

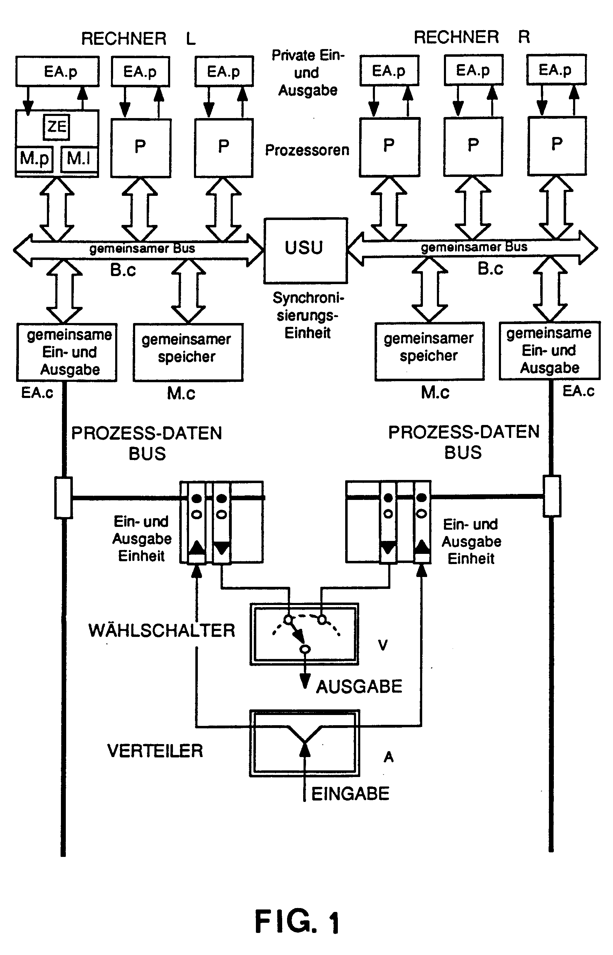

Es wird nunmehr auf die Zeichnungen Bezug genommen. In Fig. 1 sind zwei Rechner zu erkennen, L und R (links und rechts), die je aus mehreren Prozessoren P, einem für diese Prozessoren gemeinsamen Bus B.c, einem gemeinsamen Speicher M.c und einer gemeinsamen Ein- und Ausgabeeinheit EA.c bestehen. Alle Prozessoren haben gleichberechtigte Zugriffe zu den gemeinsamen Geräten, obwohl Zutrittsbeschränkungen durch die Software auferlegt werden können. Der gemeinsame Bus B.c weist einige spezielle Eigenschaften auf, auf die nachstehend dort, wo diese Eigenschaften eine Rolle spielen, noch eingegangen wird.

Die Prozessoren selbst bestehen, wie anhand des linken Prozessors in Fig. 1 zu erkennen ist, aus einer Zentraleinheit ZE, aus einem privaten Speicher M.p (einem nicht von aussen zugänglichen, zum Teil aus PROM bestehenden Speicher), aus einem lokalen Speicher M.l (einem sowohl vom gemeinsamen Bus B.c als auch von der Zentraleinheit ZE aus schreib- und lesbarem Dual-Port-Speicher), und aus lokalen Ein- und Ausgabegeräten EA.p, die nur von diesem Prozessor zu bedienen sind. Andere Organe werden im folgenden noch erläutert.

Beide Rechner, L und R, sind genau gleich aufgebaut. Auch ihre Programme sind genau identisch. Die Programme könnten auch ohne Redundanz auf einem einzelnen Rechner laufen. Ihre Ausführung wird durch eine Synchronisierungseinheit USU (Update and Synchronization Unit) derart koordiniert, dass beide Rechner stets zur gleichen Zeit die gleiche Operation ausführen. Eine unabhängige und weitere Arbeitsweisen sind aber auch möglich, wie im folgenden ebenfalls noch beschrieben wird.

Die Eingabe ist in Fig. 1 redundant ausgeführt. Die beiden Rechner können ihre Eingangsdaten jedoch auch über einen Verteiler A von einer für beide Rechner gemeinsamen Eingabe bekommen.

Gleiches gilt für die Ausgabe. In Fig. 1 ist nur der linke Rechner mit einer gemeinsamen Ausgabe über einen Wählschalter V verbunden. Durch Betätigung dieses Wählschalters wird beispielsweise eine stetige Funktion der Rechneranordnung erreicht.

Die Synchronisierungseinrichtung USU ist derart ausgebildet, dass sie die beiden Multiprozessoren von Fig. 1 synchronisieren kann, ohne auf die einzelnen Prozessoren direkt einzuwirken. Sie hat lediglich Zugriff auf die gemeinsamen Busse der beiden Multiprozessoren.

Die USU hat insbesondere Zugriff zu den Informations- und Vergabeleitungen beider Busse. Sie ist damit in der Lage, die Datentransfers und die Busvergabe in beiden Multiprozessoren zu synchronisieren und die Daten auf beiden Bussen auf Gleichheit zu überprüfen. Darüber hinaus kann sie noch weitere Funktionen ausführen.

Die Funktionen der USU sind im wesentlichen die folgenden:
1) Synchronisierung der Datentransfers
2) Synchronisierung der Busvergabe
3) Angleichung der Eingangswerte
4) Angleichung der Unterbrechungen
5) Anlernen vom Wirkrechner aus
6) Aus- und Einsynchronisierung
7) Nachführung

### 1) Synchronisierung der Datentransfers

Für die Synchronisierung der Datentransfers nützt die USU spezielle Eigenschaften der gemeinsamen Busse B.c aus. Bei den verwendeten gemeinsamen Bussen handelt es sich um parallele Rückwand-Busse (Backplane Bus), die ähnlich wie der VME (VMEbus Manufacturers Group "VMEbus Specification Manual" REV.C FEb. 1985) oder der Multibus II (Intel Corporation "Multibus II Architecture Specification Handbook" Or. No. 146077-C) aufgebaut sind und den Verkehr von Master-Modulen zu einer Anzahl von Slave-Modulen tragen.

Die speziellen Eigenschaften der verwendeten Busse B.c, die die genannten bekannten Busse nicht aufweisen und die sich die USU für die Synchronisierung der Datentransfers zunutze macht, sind:
- Die Fähigkeit, jede Information, die über dem Bus verkehrt, sei es Adresse, Lese- oder Schreibdaten auch an andere Module als den eigentlichen Adressaten mitzuteilen (Broadcast).
- Die Fähigkeit, jeden Zyklus, Adresse oder Daten, beliebig zu strecken, und zwar durch andere Einheiten als der eigentliche Adressat (Broadcast Handshake).

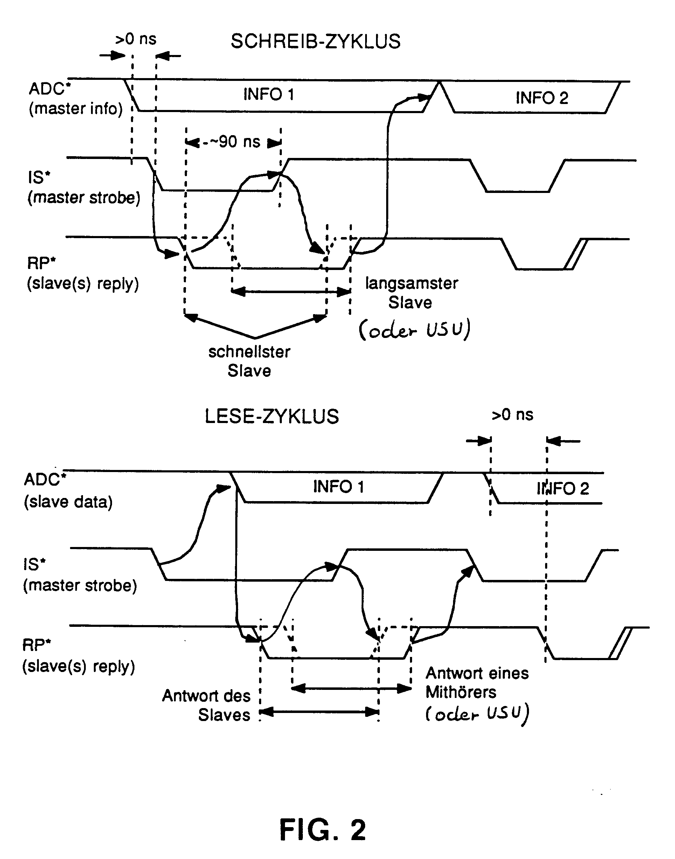

Das Protokoll der gemeinsamen Busse der Rechner erlaubt also die Rundgabe (Broadcast) von Daten an mehrere Empfänger, und dies sowohl bei Schreib- wie bei Lesedaten. Dies wird durch eine Quittungslinie RP* (reply) bewirkt, die durch Transistoren mit offenem Kollektor (oder Drain) getrieben wird und somit von mehreren Treibern gleichzeitig auf dem "tief"-Pegel gehalten werden kann. Alle am Datenverkehr über den Bus beteiligten Einheiten sind an die Quittungslinie RP* angeschlossen. Der Ruhepegel ist der "hoch"-pegel. Die Handshake-Synchronisierung wird anhand von Fig. 2 erläutert.

Im oberen Teil von Fig. 2 ist ein Schreibzyklus, im unteren Teil ein Lesezyklus dargestellt. Die bei den Zyklen über den Bus übertragene Information (Adressen, Daten, Kontrollinformation) ist durch eine Buslinie ADC* dargestellt, die lediglich stellvertretend für eine Vielzahl paralleler solcher Linien ausgewählt ist. Beim Schreiben legt dieschreibende Einheit zunächst die Information auf die Buslinien ADC* und signalisiert ihre Gültigkeit sodann durch Aktivieren (tiefziehen) einer Buslinie IS*. Alle an den Bus angeschlossenen Einheiten, die die Information übernehmen möchten, antworten daraufhin durch Aktivieren der Quittungslinie RP*. Beim Lesen dient die Aktivierung der Buslinie IS* zur Anforderung der Informationen.

Sowohl bei Lese- wie bei Schreibzyklen wird der Abschluss eines Zyklus durch Weglassen der RP*-Leitung bewirkt. Das langsamste Gerät, das am Transfer beteiligt ist, bestimmt diesen Zeitpunkt, indem dieses Gerät die RP*-Leitung tiefhält solange es die Information benötigt. Bis zu diesem Zeitpunkt belässt der Sender die Informationen auf den Buslinien ADC*.

Diese Fähigkeit nützt die Synchronisierungseinheit, um den ersten Bus zu verzögern, bis der zweite Bus nachkommt, indem sie ebenfalls die Quittungslinie RP* aktiviert. Die USU merkt sich den Bus, auf welchem der erste Buszugriff stattfindet, und verzögert diesen Bus, bis der gleiche Zyklus auf dem andern Bus stattfindet. Dabei kann die USU auch den Zyklus auf dem zweiten Bus verzögern, um die Gleichheit der Daten zu prüfen. Falls aber der zweite Bus nicht innert einer bestimmten Frist nachkommt, oder falls die Daten nicht übereinstimmen, dann bricht die Synchronisierungseinheit den Zyklus ab und meldet einen Fehler (Time-out).

### 2) Synchronisierung der Busvergabe

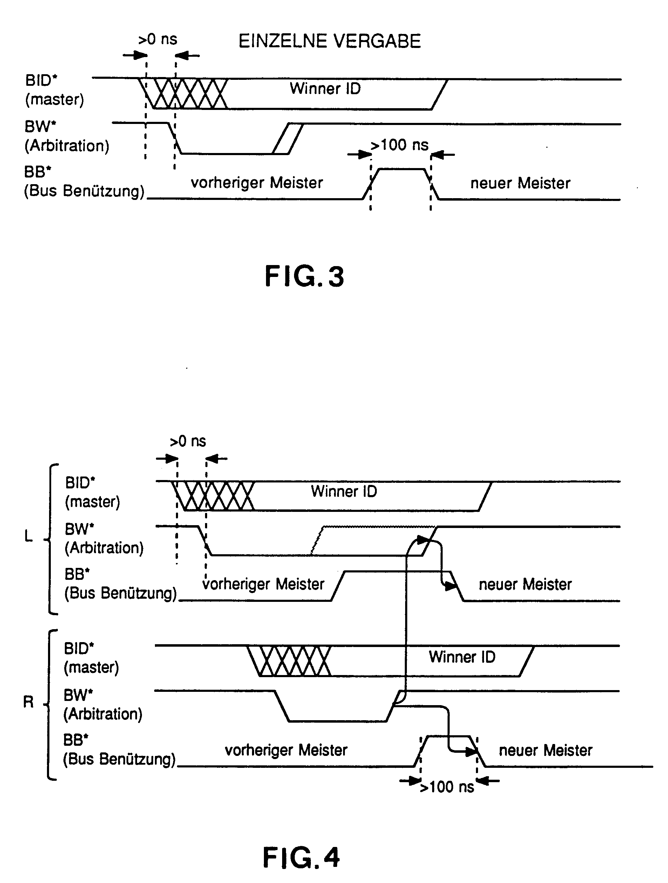

Der Synchronlauf der Busse setzt voraus, dass auf beiden Bussen die Prozessoren in der gleichen Reihenfolge bedient werden. Da eine Busvergabe prinzipiell nicht-deterministisch ist, stellt die USU sicher, dass in beiden Rechnern die Busvergaben zum gleichen Ergebnis kommen. Zu diesem Zweck muss der Bus die Identität des Gewinners der Arbitration bekannt geben. Beim verwendeten Bus werden die Eigenschaften eines Arbitrationsverfahrens, wie es in der EP-A1-0 124 806 beschrieben ist, ausgenützt. Bei dem genannten Verfahren wird die Identität des Masters für die Arbitration verwendet und auf gesonderten Busleitungen BID* weitergeleitet, wie dies Fig. 3 zeigt. Das Verfahren erlaubt auch, den jeweiligen Gewinner innerhalb einer vorgebbaren Zeit wieder abzusetzen (Destitution).

Wie aus Fig. 3 ersichtlich, wird eine Arbitration durch die Aktivierung der Leitung BW* gestartet. Alle Mitbewerber setzen darauf ihre Identität auf den BID*-Leitungen. Da diese Leitungen durch Treiber mit offenem Kollektor (bzw. Drain) angesteuert werden, wird durch ein gewichtetes binäres Auswahlverfahren die Identität des Gewinners festgestellt, die dann auf den Leitungen bleibt. Wenn das Auswahlverfahren beendet ist, lassen die Bewerber die BW*-Leitung wieder frei. Gewinner ist derjenige Bewerber, der bei der hinteren Flanke von BW* seine Identität auf den BID*-Leitungen erkennt. Diese Identität kann jetzt von allen am Bus angeschlossenen Geräten gelesen werden, d.h. auch durch die USU. Der jeweilige Gewinner darf jedoch erst dann den Bus benutzen und neuer Busmeister werden, wenn der vorherige Benutzer, der alte Busmeister, seinen Transfer abgeschlossen hat. Für die Dauer, für die ein Busmeister den Bus jeweils für sich exklusiv benötigt, aktiviert er die Leitung BB*. Ein neuer Busmeister darf den Bus erst dann benutzen, wenn der vorherige Meister die Leitung BB* freigegeben hat.

Um die Synchronisierung zu erreichen, verzögert die USU die erste Vergabe durch Tiefhalten von BW*, bis das Ergebnis der Vergabe auf dem zweiten Bus bekannt ist. Die USU stellt fest, ob die Arbitrationen bei beiden Rechnern zum gleichen Ergebnis gekommen sind. Ist dies der Fall, greift sie nicht ein. Dieser Fall ist in Fig. 4 angenommen.

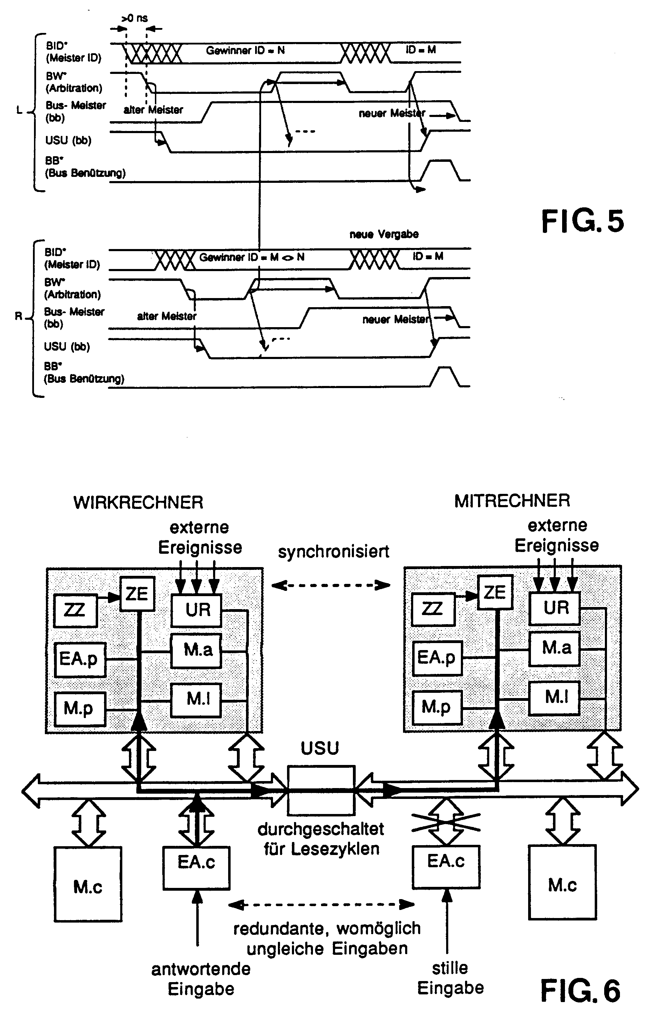

Falls jede Vergabe zu einem anderen Ergebnis kommt, schliesst die USU den Arbitrationszyklus ab und wirft ihn wieder an durch Aktivierung von BW*. Während dieser Zeit verhindert die USU die Busübernahme durch den vorläufigen Gewinner durch Tiefhalten von BB*. Die Arbitrationslogik ist dabei, wie bereits erwähnt, so gebaut, dass der Gewinner abgesetzt werden kann, bevor er den Bus benützen darf, wenn innerhalb einer bestimmten Frist BW* wieder aktiv wird, ohne dass er den Bus zu benützen angefangen hat. Dieser Ablauf ist in Fig. 5 wiedergegeben. In Fig. 5 ist anhand von zwei in den Fig. 3 und 4 nicht dargestellten Zeilen "Bus-Meister (bb)" und "USU (bb)" (die keine zusätzlichen Buslinien darstellen sollen) zu erkennen, wie sich der logische Pegel auf der Buslinie BB* durch Oder-Verknüpfung der Pegel ergibt, die die USU einerseits und die jeweiligen Busmeister andererseits dieser Busleitung zu geben suchen. Es ist hier, wie auch in allen übrigen Figuren zu beachten, dass von einer negativen Logik Gebrauch gemacht wird.

Beim zweiten Anlauf der Arbitration muss damit gerechnet werden, dass es abermals zu einer Diskrepanz kommt, denn die Arbitration muss für alle Bewerber offen sein, ansonst könnte es vorkommen, dass eine Uebereinstimmung gar nicht mehr vorkommen kann. Dadurch aber, dass die Zahl der Mitbewerber endlich ist (z.B. 32), ist sichergestellt, dass die Destitutionen abbrechen. Die Anzahl Destitutionen ist zwar eine Zufallsvarible, diese ist jedoch für beide Rechner identisch und beeinflusst somit ihren Gleichlauf nicht. Um eine Blockierung beider Busse im Falle einer Fehlfunktion der USU zu verhindern, darf die USU eine Vergabe nicht mehr als 32 Male abbrechen.

### 3) Angleichung der Eingangsdaten

Die Eingabedaten beider Rechner können von redundanten Sensoren stammen, oder zeitversetzt bei beiden Rechnern eintreffen. Somit ist es möglich, dass beide Rechner unterschiedliche Eingangsdaten bekommen, auch wenn diese aus der gleichen Quelle stammen. Damit die Programme nicht divergieren, ist es unerlässlich, die Eingangsdaten anzugleichen, so dass beide Rechner mit dem gleichen Konsensusdatum weiterfahren.

Die Angleichung der Eingangsdaten kann jedoch nicht durch die USU selbst vorgenommen werden, denn die Angleichung ist stark von der Bedeutung der Daten abhängig. Die Anwesenheit redundanter Geräte kann dem Programmierer nicht verborgen bleiben. Das Lesen und Angleichen von analogen Eingangsdaten könnte durch folgendes Programm geschehen:
Lese(EingangsDatumL, Links):
Lese(EingangsDatumR, Rechts);
KonsensusDatum := (EingangsDatumR + EingangsDatumL) / 2
Dabei braucht es dem Programm nicht bekannt zu sein, ob es im rechten oder linken Rechner ausgeführt wird. Bei der Angleichung binärer Daten gibt es mehr Möglichkeiten, die nur sinnvoll durch den Anwendungsprogrammierer ausgenützt werden können.

Damit die Programme unabhängig von der Seite, auf der sie laufen, geschrieben werden können, muss die Symmetrie der Rechner gebrochen werden, so dass ein Prozessor ein Gerät auf der eigenen oder auf der anderen Seite lesen kann. Die USU sorgt dafür, dass die Daten eines Gerätes auf beiden Seiten dupliziert werden.

Dies wird anhand von Fig. 6 erläutert. Fig. 6 zeigt eine Rechneranordnung mit zwei Rechnern, an deren Bus lediglich aus Platzgründen jeweils nur ein Prozessor, dafür jedoch detaillierter, dargestellt ist. Die beiden dargestellten Prozessoren sollen diejenigen sein, die jeweils die Zutrittsberechtigung zum gemeinsamen Bus haben.

Der Prozessor besteht jeweils aus einer Zentraleinzeit ZE, einem privaten Speicher M.p und aus privaten Ein- und Ausgabegeräten EA.p. Weiter enthält er auf der rechten Seite einen lokalen Speicher M.l, der von anderen Prozessoren aus zugänglich ist.

Dazu kommt als spezifisches Element für die Angleichung der Angleichungsspeicher M.a, der ebenfalls als Dual-Port-Speicher von B.c aus zugänglich ist. Weiter ist eine Unterbrechungseinrichtung, die aus den Einheiten ZZ und UR besteht vorgesehen. Diese Elemente werden noch beschrieben.

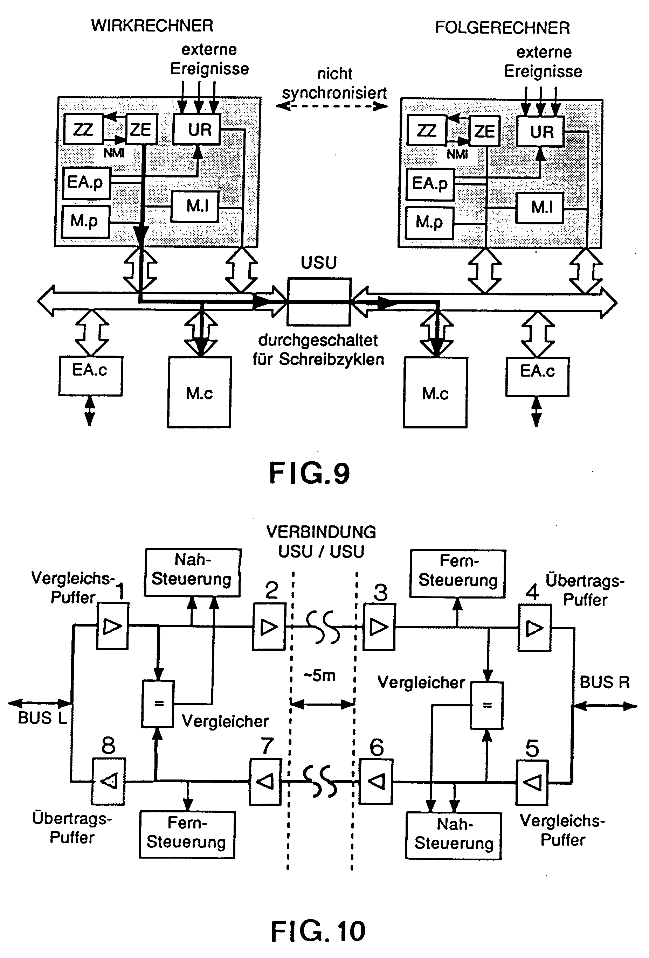

Die gemeinsamen E/A Geräte EA.c werden einer Seite fest zugeordnet. Im Unterschied zum gemeinsamen Speicher oder zum lokalen Speicher ist die Adresse von redundanten E/A-Geräten links und rechts verschieden. Die USU kann erkennen, dass ein E/A Gerät nur auf einer Seite vorhanden ist. Wenn dieses Gerät vom Prozessor adressiert ist, der auf der gleichen Seite ist, dann liefert das E/A-Gerät die Daten auf den Bus. Da zur gleichen Zeit der andere Prozessor die gleiche Adresse abfragt, schleust die USU die Daten von der Seite auf der das Gerät steht, zur anderen. Sie tut dies, indem sie die in Fig. 10 dargestellten Puffer 1-4 bzw. 5-8 aktiviert.

Die USU soll unterscheiden können zwischen symmetrischen Geräten (z.B. M.c) und asymmetrischen Geräten (z.B. EA.c). Diese Unterscheidung kann explizit geschehen, indem die USU bei der Initialisierung mit einer Gerätetabelle versehen wird. Da diese Methode umständlich ist, genügt es auch, dass die USU das Ausbleiben der Quittung auf einer Seite als Abwesenheit des Gerätes interpretiert und automatisch durchschaltet. Dabei soll jedoch vermieden werden, dass der Ausfall eines Gerätes auf einer Seite unbemerkt geschieht. Vorzugsweise erhalten die E/A-Geräte jedoch eine unterschiedliche Adresse links und rechts und werden durch ihre geographische Lage adressiert.

Darum müssen alle Geräte, rechts und links, eine unterschiedliche Adresse besitzen. Dabei brauchen die E/A-Geräte nicht einmal unterschiedlich eingestellt zu sein. Die Unterscheidung kann auf Grund erstens einer gesonderten Busleitung, z.B. einer geographischen Adresslinie, erfolgen, die angibt, auf welcher Seite (rechts oder links) sich der Prozessor befindet, und zweitens durch eine Adressposition, die angibt, ob die rechte oder linke Seite adressiert ist. Dabei kann die USU immer noch überwachen, ob die Geräteadresse auf beiden Bussen identisch ist, denn beide Prozessoren verlangen ja die gleiche Adresse (ihre Programme sind identisch).

Damit keine Adressposition verbraucht wird, um anzugeben, dass die Adressierung auf dem eingenen Bus erfolgen soll, ohne Berücksichtigung der Seite, kann festgestellt werden, dass alle E/A-Geräte auf diese Art zu adressieren sind, d.h., es ist nicht möglich, dass beide Prozessoren je ihr eigenes E/A-Gerät lesen. Schliesslich kann diese Betriebsart auf E/A-Geräte beschränkt werden, damit nicht Fehler des gemeinsamen Speichers zu Buskonflikten führen.

Bei der Angleichung der Daten aus den privaten E/A-Geräten wird ähnlich vorgegangen. Damit eine Angleichung stattfinden kann, müssen die Daten dem redundanten Prozessor zugänglich gemacht werden. Zu diesem Zweck fragt jede Zentraleinheit ZE ihre eigenen E/A-Geräte EA.p ab, und deponiert das Ergebnis im Angleichungsspeicher M.a. Dieser ist ein lokaler Speicher, der vom anderen Rechner aus abgefragt wird. Im Unterschied zum lokalen Speicher M.l, der gleiche Adresse wie der lokale Speicher seines Mitrechners hat, besitzt eine Speicherzelle dieses Angleichungspeichers eine unterschiedliche Busadresse rechts und links, wenn sie vom gemeinsamen Bus aus adressiert wird. Dagegen ist ihre (interne) Adresse auf beiden Seiten gleich, wenn sie innerhalb des Prozessors von der Zentraleinheit ZE des Prozessors adressiert wird. Der Angleichungsspeicher verhält sich am Bus wie ein gemeinsames E/A-Gerät EA.c. Die USU verhält sich daher bei der Angleichung der Daten aus den privaten E/A-Geräten gleich wie bei der oben beschriebenen Angleichung der Daten aus den gemeinsamen E/A-Geräten, d.h. sie schleust Daten von einem gemeinsamen Bus zum anderen. In der Tat könnte ein Prozessor auch die Rolle eines E/A-Gerätes übernehmen, und dann wäre der Angleichungsspeicher als Datenregister zu betrachten.

Es ist zu bemerken, dass die Behandlung der privaten E/A-Geräte meist unsynchronisiert ist, d.h. die Zentraleinheiten sind für die Dauer der privaten Operationen nicht synchronisiert, denn die Laufzeiten können erheblich unterschiedlich sein (z.B. wenn eine Platte gelesen wird). Wie dies geschieht und wie zurücksynchronisiert wird, wird noch erläutert.

### 4) Angleichung der Unterbrechungen

Es muss sichergestellt werden, dass Prozessoren in beiden Rechnern genau an der gleichen Instruktion unterbrochen werden, weil sonst die Programme rechts und links auseinanderlaufen könnten. Man unterscheidet dabei interne und externe Unterbrechungen. Interne Unterbrechungen sind solche, die auf der Prozessorkarte selbst generiert werden und z.B. von einem seriellen Kontroller oder von der Uhr herrühren. Externe Unterbrechungen werden über den Bus übertragen. Externe Unterbrechungen stammen entweder von vereits synchronisierten Prozessoren, oder von der USU selbst, die dafür verantwortlich ist, dass beide Busse gleichzeitig die Unterbrechungsanforderung tragen. Dabei wird eine externe Unterbrechung in eine interne umgewandelt. Es werden daher in der Folge auch nur interne Unterbrechungen betrachtet.

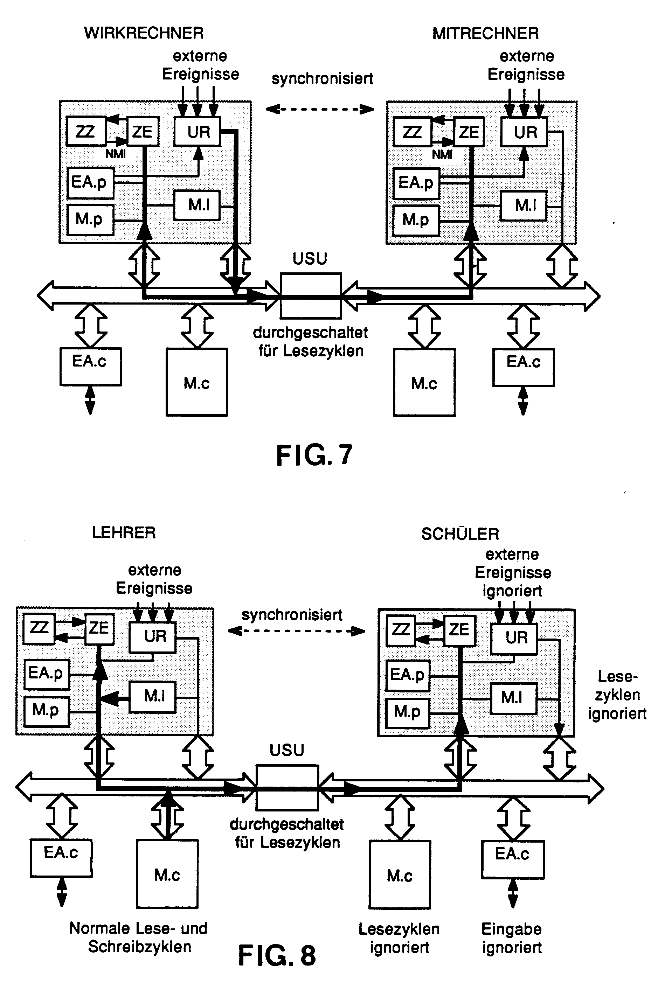

Die Synchronisierung der internen Unterbrechungen geschieht zunächst ohne Mithilfe der USU, und wird vorwiegend durch die Unterbrechungseinheit ausgeführt, die bei jedem unterbrechungsfähigen Prozessor vorhanden ist. Dies ist in Fig. 7 dargestellt.

Die Unterbrechungseinheit besteht aus den Einheiten ZZ und UR. Der Zyklenzähler ZZ ist mit dem Takt der Zentraleinheit fest gekoppelt, z.B. indem er die Adresszyklen der ZE zählt. Wenn dieser Zähler einen bestimmten Stand erreicht, generiert er eine nicht maskierbare Unterbrechung (NMI) des Prozessors, und wird dabei rückgesetzt. Ausser dieser NMI erkennt der Prozessor keine andere Unterbrechungsanforderungen. Der Prozessor wird somit nach einer bestimmten Anzahl Instruktionen unterbrochen, z.B. alle 1000 Instruktionen, was etwa 1 ms entspricht. In den Prozessoren links und rechts wurden die Zähler ursprünglich auf dem gleichen Stand initialisiert. Dadurch werden stets beide Prozessoren jeweils bei der gleichen Instruktion unterbrochen.

Die Unterbrechungseinheit enthält überdies ein Unterbrechungsregister UR. Die Unterbrechungsanforderungen, die aus externen Geräten oder aus internen Geräten EA.p stammen, gelangen nicht direkt an die Zentraleinheit, sondern werden im UR gespeichert. Das UR ist vom Bus B.c her lesbar, als ob es sich um einen lokalen Speicher handeln würde (obwohl die Zentraleinheit ZE des gleichen Prozessors keinen direkten Zugriff auf ihn hat) und es besitzt eine unterschiedliche Adresse rechts und links, als ob es sich um ein gemeinsames Eingabegerät handeln würde. Er kann also als Teil des Angleichungsspeichers betrachtet werden.

Wenn die Zentraleinheit durch die NMI unterbrochen wird, liest sie darauf ihr eigenes UR und das UR ihres Mitrechners als ob es sich um ein E/A-Gerät handeln würde. Dabei muss sie zwangsläufig dies über den Umweg des Busses B.c machen, damit der andere Prozessor ihre Register lesen kann.Die USU schleust den Inhalt des Unterbrechungsregisters von einem Bus zum andern. Die gelesenen Unterbrechungsanforderungen werden in beiden Rechnern angeglichen, z.B. durch Bildung der Schnittmenge der Unterbrechungen.

Eine Unterbrechung wird in der Regel erst beantwortet, wenn sie von beiden Prozessoren erkannt wurde, aber andere Strategien sind denkbar. Z.B. muss der zeitliche Verzug zwischen Unterbrechungsanforderungen in einem festgelegten Rahmen bleiben und es darf zu keiner Ueberlappung von Anforderungen kommen. Die Beurteilung solcher Situationen ist aber anwendungsabhängig und wird vorzugsweise durch das Betriebssystem, auf Grund von Konfigurationsdaten, festgelegt.

### 5) Anlernen einer reparierten Einheit

Nach Reparatur eines ausgefallenen Rechners ist es nötig, diesen wieder anzulernen, um die Redundanz wieder herzustellen. Dazu wird der Inhalt der Speicher des Wirkrechners (Lehrer) in die Speicher des anderen Rechners (Schüler) hinüberkopiert, und zwar bei laufendem Lehrer-Rechner. Dies wird durch Fig. 8 verdeutlicht.

Zu diesem Zweck werden paarweise alle redundanten Prozessoren beider Rechner auf die gleiche Anfangsadresse gebracht, z.B. durch eine Unterbrechungsanforderung, die vorzugsweise von der USU ausgeht. Dadurch fangen gegenüberstehende Prozessoren bei der gleichen Adresse an und haben somit paarweise den gleichen Programmzählerstand. An dieser Stelle führen sie beide ein kleines Programm aus, das das Anlernen vorbereitet.

Es soll hier zwischen Zugriffen auf die gemeinsamen Geräte und auf die lokalen Geräte unterschieden werden. Bei Zugriffen auf die gemeinsamen Geräte werden die Leseoperationen auf dem Bus des Schülers speziell behandelt. Alle Schreiboperationen, sowohl beim Lehrer wie beim Schüler, verlaufen normal.

Bei Lesezugriffen auf den gemeinsamen Bus B.c ignorieren die Speicher M.c und E/A-Geräte EA.c des Schülers die Leseanforderung. Dafür werden die Lesedaten vom Bus des Lehrers durch die USU an den Schülerbus weitergeleitet und vom Schülerprozessor übernommen. Dadurch bekommt der Schüler die Daten des Lehrers, ohne sie direkt anzufordern. Wenn er aufgrund dieser Daten arbeitet, wird der Schüler zu gleichen Ergebnissen wie der Lehrer kommen und führt somit die gleichen Schreiboperationen durch. Dass dies auch so geschieht, kann durch die USU überwacht werden. Damit der Angleichungsvorgang in endlicher Zeit zu einem Abschluss kommt, liest ein kleines Programm im Hintergrund jede einzelne Zelle des gemeinsamen Speichers und legt sie wieder ab an der gleichen Adresse. Nach Ablauf dieses Programms sollten also beide gemeinsamen Speicher auf dem gleichen Stand sein. Dabei wird der Lehrer-Rechner lediglich durch das Hintergrundprogramm gebremst.

Im Lernmodus muss also das Lesen aus dem gemeinsamen Speicher M.c und aus den gemeinsamen E/A-Geräten EA.c des Schülers unterbunden werden. Dies könnte dadurch erreicht werden, dass eine spezielle Adressposition gebraucht wird, z.B. das höchste Adressbit, um mitzuteilen, dass der Prozessor nicht seinen eigenen Bus, sondern den Bus der anderen Hälfte adressieren möchte. Dies hätte aber zur Folge, dass die Buszyklen links und rechts nicht mehr identisch wären und die USU könnte die Adressen und Daten nicht mehr vergleichen.

Deshalb wird eine andere Lösung bevorzugt: Alle Geräte am Bus, d.h. auch die USU, müssen erkennen, dass der Rechner auf einer Seite sich im Lernmodus befindet. Dies kann aufgrund einer speziellen Bus-Linie oder aufgrund einer E/A-Anweisung geschehen. Solange der Schüler-Rechner sich im Lernmodus befindet, ignorieren alle seine Geräte die Leseanforderung. Die USU synchronisiert nach wie vor alle Zyklen, und schaltet die Lesedaten bei Lesezyklen zum anderen Bus durch. Nach Abschluss des Kopierprogramms wird die Bus-Linie wieder freigelassen, bzw. der Status durch eine Broadcast-Meldung zum Synchronmodus zurückgeschaltet.

Die Daten des lokalen Speichers M.l und des privaten Speichers M.p des Lehrers werden dadurch zum Schüler übertragen, dass sie nacheinander über den gemeinsamen Bus B.c durch den Lehrer selbst gelesen werden. Die USU schleust die Daten wiederum zum Bus des Schülers durch. Zu diesem Zweck muss der Lehrer-Rechner wissen, dass er im Lehrmodus ist.

Durch den Anlernmodus wird zwangsläufig der Lehrer-Rechner gebremst, denn Buszugriffe auf den gemeinsamen Bus dauern länger als lokale Zugriffe und es muss zusätzlich ein Kopierprogramm im Hintergrund laufen, dessen Ausführung sich über mehrere Sekunden erstrecken kann.

### 6) Ein- und Aussynchronisierung

Es ist für bestimmte Operationen unumgänglich, dass der Synchronismus zwischen beiden Rechnern aufgegeben wird. Dies ist der Fall bei nicht-deterministischen Operationen wie z.B. bei Plattenzugriffen, wo naturgemäss beide Rechner zu anderen Zeitpunkten eine Antwort bekommen, oder bei Netzwerkzugriffen, die eine nicht-deterministische Strategie, wie z.B. bei Ethernet, verfolgen oder wenn Uebertragungsfehler zu erwarten sind.

In diesem Fall wird der Synchronismus für eine bestimmte Zeit aufgehoben, und zwar nur bei bestimmten Prozessoren des Rechners, nämlich bei denjenigen, die in eine nicht-deterministische Operation verwickelt sind.

Dies geschieht dadurch, dass aufgrund einer speziellen Anweisung an die USU, die von beiden Rechnern gleichzeitig verlangt wird, die USU die Synchronisierung der Buszugriffe, die von einem bestimmten Prozessor kommen, unterlässt. Dazu überwacht die USU die Identifikation der Busmeister laufend.

Nach einer bestimmten Zeit ist einer der Prozessoren bereit, sich wieder zu synchronisieren. Er schreibt seine Absicht in ein Register der USU und wartet in einer Warteschleife, bis auch der andere Prozessor die gleiche Absicht in ein entsprechendes Register der USU schreibt und ebenfalls in eine Warteschleife geht. Sobald beide Prozessoren zur Wiedersynchronisierung bereit sind, schickt die USU diesen zur gleichen Zeit eine Unterbrechungsanforderung. Diese bewirkt, dass die Prozessoren die Warteschleife verlassen und normal und wieder synchronisiert weiterfahren.

Um die synchrone Arbeit der anderen Einheiten während der freilaufenden Phase nicht zu stören, müssen zusätzlich zu den Arbitrationsregeln, die unter 2) aufgestellt wurden, noch folgende hinzugefügt werden: Wenn ein freilaufender Prozessor eine Arbitration gewinnt, dann destituiert die USU den Gewinner einer Arbitration, die auf dem anderen Bus eventuell stattfindet, nicht aber den freilaufenden Prozessor.

Eine Ausnahme bildet der Fall, dass es sich bei beiden Gewinnern um freilaufende Prozessoren handelt, in welchem Fall keine Destitution stattfindet. Dies hat zur Folge, dass wenn ein Bus von einem freilaufenden Prozessor gebraucht wird, auf der anderen Seite nur ein anderer freilaufender Prozessor den Bus benützen darf. Diese Betriebsart gibt den freilaufenden Prozessoren eine höhere Priorität, die aber erwünscht ist, denn die freilaufende Phase muss möglichst kurz bleiben.

Es ist schliesslich zu bemerken, dass der freilaufende Betrieb keine Datenintegrität durch Vergleich ermöglicht. Um die Datenintegrität sicherzustellen, muss durch Software erreicht werden, dass beide Rechner die gleichen Daten führen, bevor diese verwendet werden. Es muss also hier eine Angleichung stattfinden.

### 7) Nachführung

Es ist bei stetiger Arbeitsweise auch möglich, eine Arbeit nur durch einen Rechner ausführen zu lassen, und dann die Resultate dem anderen Rechner mitzuteilen. Dies wäre z.B. erwünscht, wenn nur ein Eingabegerät vorhanden ist, weil z.B: das andere ausgefallen ist. Zu diesem Zweck arbeitet nur ein Rechner, während der andere auf den Abschluss der Arbeit wartet. Die USU führt aber währenddessen seinen gemeinsamen Speicher nach, in dem sich die Ergebnisse dann so befinden, als hätte der Bereitschaftsrechner sie von seinem eigenen Eingabegerät erhalten. Dies ist in Fig. 9 dargestellt.

Die USU besteht physikalisch aus zwei identischen Hälften, die je an einem der gemeinsamen Busse angeschlossen sind und die durch einen schnellen Kommunikationskanal miteinander verbunden sind. Die prinzipielle Struktur der USU zeigt Fig. 10. Sie ist symmetrisch aufgebaut.

Der Kommunikationskanal ermöglich die Uebertragung von Daten, Adressen und Steuersignalen von einem gemeinsamen Bus B.c zum anderen. Er besteht aus vier Puffern (1,2,3,4, resp. 5,6,7,8) und einer Verbindungsstrecke zwischen den beiden Hälften der USU. Zum Kommunikationskanal zählen ebenfalls Vergleicher, die die Gleichheit der übertragenen Daten zu überprüfen haben. Die Verbindungsstrecke kann beispielsweise durch ein Flachbandkabel von bis zu 5 m Länge realisiert sein.

Der Kommunikationskanal dient zunächst dazu, die Steuersignale des einen Busses dem Teil der USU, der auf dem anderen Bus sitzt, zugänglich zu machen, damit die Buszyklensynchronisierung stattfinden kann. Zu diesem Zweck schalten die Puffer 1,2,3 resp. 5,6 und 7 die Information durch. Die Puffer 2,3 bzw. 6,7 dienen lediglich der Pufferung der Uebertragungsstrecke zwischen den beiden Hälften der USU und bestehen aus Linientreibern (z.B. 74LS240) bzw Linienempfängern (z.B. 74LS245).

Zum Vergleich der Daten, die auf beiden Bussen übertragen werden, genügt folgende Konfiguration: Der Vergleicher der linken Hälfte der USU bekommt seine Daten vom linken Bus über den Puffer 1 und vom rechten Bus über die Puffer 5,6 und 7. Auf der anderen Seite bekommt der Vergleicher der rechten Hälfte der USU seine Daten vom linken Bus über die Puffer 1,2 und 3 und vom rechten Bus über den Puffer 5.

Die gleichen Datenpfade werden auch für die Synchronisierung der Busvergabe verwendet.

Für die Angleichung der Daten, d.h. für die Durchschleusung der Daten von einem Bus zum andern werden zusätzlich die Puffer 4 und 8 verwendet.

Die Arbeitsweise jeder Seite der USU wird durch zwei Steuereinheiten bestimmt, die Nahsteuerung und die Fernsteuerung die entsprechend in jeder Hälfte der USU vorhanden sind.

Die Nahsteuerung der einen Hälfte der USU übernimmt die Steuerung der Abläufe, die auf dem Bus stattafinden, auf dem sich diese Hälfte der USU befindet. In dieser Einheit wird die Abwicklung des Protokolls verfolgt und werden die Signale RP*, BW* und BB* generiert. Die Synchronisierung mit den Steuersignalen auf dem jeweils anderen Bus erfolgt über den Kommunikationskanal.

Die Fernsteuerung wird für die Mitteilung der Zustände der einen Hälfte der USU zu ihrer anderen Hälfte benötigt. In der Fernsteuerung sind z.B. die Register enthalten, die die Ein- und Aussynchronisierung regeln. Ueber diesen Kanal kann auch der anderen Einheit mitgeteilt werden, dass es sich in den Lehrmodus, bzw. den Nachführmodus, zu schalten hat.

Die USU wird von einem Satz von Kontrollregistern gesteuert, der auf beiden Seiten vorhanden ist. Für jeden Prozessor gibt es ein Register, d.h. es sind 32 Register in jeder Hälfte der USU vorhanden.

Diese Register bestimmen, in welchem Modus sich die USU befindet. Es ist zu bemerken, dass der Modus nur für einen bestimmen Prozessor gilt, d.h. verschiedene Prozessoren können sich in unterschiedlichen Modi befinden.

Die Zweiteilung der USU dient vor allem dem Zweck, eine rückwirkungsfreie Arbeitsweise zu erreichen. Ausserdem werden dadurch die Entwicklungskosten gesenkt, denn beide Hälften sind identisch. Es gibt keine Komponente der USU, deren Ausfall den Ausfall beider Rechner zur Folge haben würde. Auch sind beide Rechner in der Lage, bei Aufall der USU weiterzuarbeiten, allerdings ohne Synchronisierung.

Diese Modi sind:
1) FREILAUF
   Dieser Modus wird für eine unabhängige Arbeitsweise beider Rechner gebraucht, oder wenn ein Rechner nicht mehr einsatzbereit ist. Die USU synchronisiert den Busverkehr nicht und steht lediglich in Bereitschaft, um Steueranweisungen zu erhalten.
2) GLEICHTAKT
   Dieser Modus ist der übliche Modus bei Gleichlauf der Rechner. Die USU synchronisiert die Buszyklen und die Arbitrationszyklen auf beiden Seiten.
3) VERGLEICH
   Die USU vergleich die Daten links und rechts, um Fehler festzustellen. Dieser Modus wird zusätzlich zum Gleichlaufmodus verwendet, wenn die Daten auf beiden Seiten gleich sein sollten.
4) UEBERTRAG
   Die USU überträgt bei Lesezyklen die Daten von einem Bus zum andern. Dieser Modus ist asymetrisch; die Hälfte der USU, die auf der führenden Seite ist, verhält sich als ob sie im Gleichtakt/Vergleich Modus wäre. Die Hälfte der USU, die auf der geführten Seite ist, inseriert die Daten in den Lesezyklus. Dabei sind Adresse und Daten auf beiden Seiten gleich, der Vergleichsmodus kann bestehen bleiben.
   Der Uebertrag-Modus kann auf zwei Arten zustandekommen:
   a) Während der Angleichung: Wenn eine E/A-Anweisung ein Gerät auf der anderen Seite adressiert. Zu diesem Zweck erkennt die USU aus der geographischen Adresse, auf welcher Seite das Gerät steht. Dieser Modus ist bei Zellen des gemeinsamen Speichers nicht erlaubt, da diese nicht aufgrund der geographischen Adresse adressiert werden.
   b) Während des Anlernens: Die USU ist so geschaltet, dass sie bei jedem Lesezyklus die Daten zur anderen Seite überträgt. Dieser Modus hat keine Auswirkung auf die führende Seite. Dieser Modus kann nur durch einen Rechner in Freilauf gesetzt werden. Fall das Setzen im Gleichtaktmodus auftreten würde, hätte es die Abschaltung beider Hälften der USU zur Folge. Nach Abschluss des Anlernens kann dann dieser Modus zurückgesetzt werden.
5) RENDEZ-VOUS
   Die USU erwartet, dass die gleiche Identifikation auf der anderen Seite vorkommt, und schickt daraufhin eine Unterbrechung zu beiden Prozessoren. Zu diesem Zweck wird der Rendez-vous-Befehl immer von beiden Hälften der USU beachtet. Die USU führt daraufhin eine Busvergabe durch und sendet eine Unterbrechungsanforderung zu den betreffenden Prozessoren.
6) KOPIEREN
   Dieser Modus wird für die Nachführung einer nichtsynchronisierten Einheit oder eines Standby-Rechners gebraucht. Die USU schaltet die Schreibzyklen von der führenden zur geführten Seite durch. Zu diesem Zweck muss die USU eine Busvergabe auf der geführten Seite durchführen.

Folgende Weiterbildungen wären schliesslich noch von Vorteil:
- Die Synchronisierung der Datentransfers und der Busvergabe wie sie weiter oben beschrieben ist, setzt einige Einschränkungen im Busprotokoll voraus, was die Antwortgeschwindigkeit der Geräte angelangt. Insbesondere muss sichergestellt sein, dass der Bus, der als erster den Zyklus beginnt, auch als erster damit aufhört. Diese Einschränkungen könnten durch zwei zusätzliche Monitor-Leitungen aufgehoben werden, die nur durch die USU bedient werden können und die Zyklen verzögern, bis beide Seiten soweit sind.
- Die Verbindung zwischen beiden Hälften der USU könnten über optische Fasern erfolgen. Damit liesse sich die Rückwirkungsfreiheit der Anordnung nachweisen, denn optische Fasern übertragen nur in einer Richtung. Allerdings muss mit einer Modulationsgeschwindigkeit von 256 kb/s gerechnet werden.
- Eine kurzfristige zeitliche Abkopplung der Rechner wäre möglich, mit dem Ziel, die Kopplung elastischer zu gestalten. Dabei könnten die Rechner eine bestimmte Anzahl von Zyklen voneinander abweichen, wenn dies nur für kurze Zeit der Fall ist. Bei diesem Verfahren braucht ein Rechner nicht mehr zu warten, bis die Resultate des anderen vorliegen, sondern fährt gleich weiter. Zu diesem Zweck werden die Puffer 3 und 7 der USU als FIFO-Speicher ausgebildet.

Die vorliegende Erfindung erlaubt zum ersten Mal die Synchronisierung eines verdoppelten Multiprozessor-Systems mit beliebiger Buszuteilungsstrategie. Damit lassen sich redundante Rechner mit einem handelsüblichen Betriebssystem programmieren, während herkömmliche redundante Rechner nur zyklische Programme abarbeiten können. Die Erfindung erlaubt überdies eine Vielzahl von Arbeitsmodi, die prinzipiell auch im Falle eines Standby-Rechners Verwendung finden können. Die Erfindung erlaubt eine geographische Trennung der Redundanz, die in der Prozessleittechnik geschätzt wird.

## Patentansprüche

1. Fehlertolerante Rechneranordnung, basierend auf dem Duplex-Nebenlauf-Prinzip mit zwei eng gekoppelten, jedoch räumlich separierbaren, identisch aufgebauten, mit übereinstimmenden Programmen geladenen und an gemeinsame oder redundante Eingabekanäle sowie einen gemeinsamen Ausgabekanal anschliessbaren Rechnern (L, R),
gekennzeichnet durch folgende Merkmale:
- bei beiden Rechnern (L, R) sind mehrere Prozessoren (P) neben einem gemeinsamen Ein- und Ausgabegerät (EA.c) und einem gemeinsamen Speicher (M.c) an jeweils einen gemeinsamen Bus (B.c) angeschlossen;
- der gemeinsame Bus (B.c) weist die Fähigkeit auf, jede Information, die über ihn verkehrt, wie Adressen oder Lese- und Schreibdaten, auch an andere Prozessoren (P) als den eigentlichen Adressaten mitzuteilen;
- es ist eine mit den Bussen (B.c) beider Rechner (L, R) verbundene Synchronisierungseinheit (USU) vorgesehen, welche zwei identische Hälften aufweist, die je an einem der gemeinsamen Busse (B.c) angeschlossen und die durch einen Kommunikationskanal miteinander verbunden werden;
- die Synchronisierungseinheit (USU) führt ohne direkte Einwirkung auf die einzelnen Prozessoren (P) eine Synchronisation der beiden Rechner (L, R) herbei, indem sie in jeder ihrer beiden Hälften Signale (RP*, BW* und BB*) generiert, die dazu dienen, jeden Zyklus in den an die beiden Hälften der Synchronisierungseinheit (USU) angeschlossenen Bussen (B.c) beliebig zu strecken (Signal RP*), und eine Busarbitration dann noch einmal zu starten, wenn die beiden Rechner (L,R) an unterschiedliche als Busmaster wirkende Prozessoren (P) vergeben werden (BW*, BB*);
- der Kommunikationskanal ermöglicht die Übertragung von Daten, Adressen und Steuersignalen von einem gemeinsamen Bus zum anderen und umgekehrt.

2. Rechneranordnung nach Anspruch 1, gekennzeichnet durch folgende Merkmale:
- Der Kommunikationskanal weist zur bidirektionalen Uebertragung von Daten, Adressen und Steuersignalen zwei unidirektionale Teilkanäle auf;
- in den beiden Hälften der Synchronisierungseinheit ist jeweils ein Vergleicher vorgesehen, der jeweils an die beiden Teilkanäle angeschlossen ist;
- in beiden Teilkanälen sind Puffer (1,2,...,8) vorgesehen, über die die Daten, Adressen und Steuersignale eines gemeinsamen Busses (B.c) selektiv zu den Vergleichern oder zum jeweils anderen Bus bei Bedarf durchgeschaltet werden können.

3. Rechneranordnung nach Anspruch 2, gekennzeichnet durch folgende Merkmale:
- In jeder Hälfte der Synchronisierungseinheit (USU) sind eine Nahsteuerung und eine Fernsteuerung vorgesehen;
- die Nahsteuerung jeder Hälfte der Synchronisierungseinheit übernimmt jeweils die Steuerung von Abläufen auf dem gemeinsamen Bus, an den die jeweilige Hälfte angeschlossen ist;
- die Fernsteuerung dient zur Uebertragung des Zustandes der Hälfte der Synchronisierungseinheit, der sie zugeordnet ist, zur jeweils anderen Hälfte;
- die möglichen Zustände der beiden Hälften der Synchronisierungseinheit ergeben sich aus den Zuständen einer Mehrzahl von Registern, die in den beiden Hälften jeweils vorgesehen sind.

4. Rechneranordnung, nach einem der Ansprüche 1 - 3,
gekennzeichnet durch folgende Merkmale:
- in beiden Rechnern (L, R) können sämtliche über die Busse (B.c) übertragenen Daten von allen an sie angeschlossenen Einheiten, wie die Prozessoren (P), das Ein- und Ausgabegerät (EA.c) und der Speicher (M.c), empfangen werden;
- die Dauer der Buszyklen ist in beiden Rechnern (L, R) durch die langsamste jeweils an ihnen teilnehmende Einheit bestimmt;
- die Synchronisierungseinheit (USU) verzögert jeden Buszyklus so lange, bis der gleiche Buszyklus auch auf dem Bus des jeweils anderen Rechners auftrifft.

5. Rechneranordnung, nach einem der Ansprüche 1 - 3,
gekennzeichnet durch folgende Merkmale:
- die Zutrittsberechtigung zum gemeinsamen Bus (B.c) wird durch ein Arbitrationsverfahren ermittelt;
- die Identität des jeweiligen Gewinners eines Arbitrationsverfahrens wird jeweils über Leitungen des gemeinsamen Busses (B.c) übertragen;
- innerhalb einer vorgebbaren Zeitspanne nach Beendigung der Arbitration ist der jeweilige Gewinner absetzbar und es kann eine Wiederholung des Arbitrationsverfahrens erzwungen werden;
- die Synchronisierungseinheit (USU) vergleicht jeweils die Identität der Gewinner paralleler Arbitrationen auf den Bussen (B.c) der beiden Rechner (L, R)und setzt diese jeweils wieder ab und erzwingt jeweils wieder eine neue Arbitration, wenn deren Identität nicht identisch ist.

6. Rechneranordnung, nach einem der Ansprüche 1 - 3,
gekennzeichnet durch folgende Merkmale:
- zu mindestens einer als Eingabegerät (EA.c) ausgebildeten Einheit in jedem der Rechner gibt es im jeweils anderen Rechner, eine ebenfalls als Eingabegerät (EA.c) ausgebildete entsprechende Einheit, jedoch mit unterschiedlicher Adresse;
- wird eines von zwei einander entsprechenden Eingabegeräten (EA.c) in beiden Rechnern (L, R) gleichzeitig adressiert, so schleust die Synchronisierungseinheit (USU) die von dem genannten Eingabegerät (EA.c) auf den Bus (B.c), an dem es angeschlossen ist, gelieferten Daten zum Bus des anderen Rechners hinüber.

7. Rechneranordnung, nach einem der Ansprüche 1 - 3,
gekennzeichnet durch folgende Merkmale:
- die Prozessoren (P) sind durch eine Unterbrechungsanforderung unterbrechbar;
- bei jedem Prozessor (P) ist eine Unterbrechungseinheit (ZZ,UR) vorhanden, die einen Zyklenwähler (ZZ) und ein vom gemeinsamen Bus (B.c) aus jeweils lesbares Unterbrechungsregister (UR) aufweist;
- die Prozessoren (P) erkennen nur Unterbrechungsanforderungen an, die von den ihnen zugeordneten Zyklenwählern (ZZ) generiert wurden;
- alle anderen Unterbrechungsaufforderungen führen nicht unmittelbar zu einer Unterbrechung, sondern werden jeweils im Unterbrechungsregister (UR) gespeichert;
- die Unterbrechungsregister (UR) von einander entsprechenden Prozessoren (P) in beiden Rechnern (L, R) weisen eine unterschiedliche Adresse auf;
- nach jeweils einer vorgebbaren Anzahl von Zyklen unterbrechen die Zyklenzähler (ZZ) jeweils die ihnen zugeordneten Prozessoren (P);
- die unterbrochenen Prozessoren (P) lesen über den gemeinsamen Bus (B.c), an dem sie jeweils angeschlossen sind, den Inhalt der ihnen zugeordneten Unterbrechungsregister (UR) sowie zusätzlich über den gemeinsamen Bus des jeweils anderen Rechners den Inhalt der Unterbrechungsregister (UR) der im anderen Rechner ihnen jeweils entsprechenden Prozessoren (P);
- zur Ermöglichung des letztgenannten Lesevorgangs verbindet die Synchronisierungseinheit (USU) die gemeinsamen Busse (B.c) beider Rechner (L, R) für die Dauer des Lesevorgangs miteinander;
- gelesene, einander entsprechende Unterbrechungsanforderungen werden in beiden Rechnern (L, R) in gleicher Weise einander angeglichen.

8. Rechneranordnung, nach einem der Ansprüche 1 - 3,
gekennzeichnet durch folgende Merkmale:
- ist ein Rechner (Schüler) ausgefallen und soll er wieder in Betrieb genommen werden, werden die Prozessoren, die sich in beiden Rechnern jeweils entsprechen, paarweise auf die gleiche Programmadresse gebracht;
- der ausgefallene Rechner (Schüler) wird in einen Lernmodus und der nicht ausgefallene in einen Lehrmodus gesetzt;
- die E/A-Geräte (EA.c, EA.p) und die Speicher (M.I; M.c, M.p) eines sich im Lernmodus befindenden Rechners ignorieren sämtliche Lernanforderungen;
- die aufgrund der Leseanforderungen auf dem gemeinsamen Bus (B.c) des sich im Lehrmodus befindlichen Rechners (Lehrers) erscheinenden Daten werden von der Synchronisierungseinheit (USU) zum gemeinsamen Bus (B.c) des sich im Lernmodus befindlichen Rechners hinübergeschleust;
- der sich im Lehrmodus befindliche Rechner liest nach und nach parallel zur Ausführung seines normalen Programms sämtliche Adresspositionen seiner Speicher über seinen gemeinsamen Bus;
- auch bei den letztgenannten Lesevorgängen schleust die Synchronisierungseinheit die Daten zum Bus des sich im Lernmodus befindlichen Rechners hinüber.

9. Rechneranordnung, nach einem der Ansprüche 1 - 3,
gekennzeichnet durch folgende Merkmale:
- in beiden Rechnern (L, R) können sämtliche über die Busse (B.c) übertragenen Daten von allen an sie angeschlossenen Einheiten, wie Prozessoren (P), Ein- und Ausgabegerät (EA.c) und Speicher (M.c), empfangen werden;
- die Dauer der Buszyklen ist in beiden Rechnern (L, R) durch die langsamste jeweils an ihnen teilnehmenden Einheit bestimmt;
- die Synchronisierungseinheit (USU) verzögert jeden Buszyklus so lange, bis der gleiche Buszyklus auch auf dem Bus des jeweils anderen Rechners auftritt;
- zwei einander entsprechende Prozessoren (P) in beiden Rechnern (L, R), welche nicht-deterministische Operationen ausführen wollen, melden dies der Synchronisierungseinheit (USU);
- die Synchronisierungseinheit (USU) unterlässt nach Empfang dieser Meldungen die Synchronisierung der Buszyklen der genannten Prozessoren (P);
- sobald einer der beiden genannten, nicht mehr synchronisierten Prozessoren bereit ist, sich wieder zu synchronisieren, signalisiert er dies der Synchronisierungseinheit und geht in eine Warteschleife, bis auch der entsprechende Prozessor im anderen Rechner seine Bereitschaft zur Wiedersynchronisierung signalisiert und ebenfalls in eine Warteschleife geht;
- wenn die genannten Prozessoren derart zur Wiedersynchronisierung bereit sind, schickt die Synchronisierungseinheit diesen gleichzeitig eine Unterbrechungsanforderung, die jeweils bewirkt, dass die Prozessoren ihre Warteschleifen verlassen und normal und wieder synchronisiert weiterfahren.

10. Rechneranordnung, nach einem der Ansprüche 1 - 3,
gekennzeichnet durch folgende Merkmale:
- wenn nur einer der Rechner (L) arbeitet, während der andere (R) auf den Abschluss der Arbeit wartet, wird der gemeinsame Speicher (M.c) des wartenden Rechners (R) durch die Synchronisierungseinheit (USU) nachgeführt, indem die Synchronisierungseinheit (USU) die Daten, die über den Bus (B.c) des arbeitenden Rechners (L) in den gemeinsamen Speicher (M.c) des arbeitenden Rechners (L) geschrieben werden, zum Bus (B.c) des wartenden Rechners (R) hinüberschleust.

## Claims

1. Fault-tolerant computer arrangement, based on the duplex concurrent principle with two closely linked, but spatially separable, identically constructed computers (L, R) which are loaded with matching programs and can be connected to common or redundant input channels and to a common output channel, characterised by the following features:
- in both computers (L, R) a plurality of processors (P) are connected, besides to a common input and output device (EA.c) and a common memory (M.c), to a common bus (B.c) in each case;
- the common bus (B.c) has the ability of notifying each information item which it transfers, such as address or read and write data, also to processors (P) other than the actual addressees;
- a synchronisation unit (USU) connected to the buses (B.c) of both computers (L, R) is provided, which has two identical halves, each of which is connected to one of the common buses (B.c) and which are connected to one another via a communications channel;
- the synchronisation unit (USU) synchronises the two computers (L, R) without directly influencing the individual processors (P) in that it generates signals (RP*, BW* and BB*) in each of its two halves which serve to extend (signal RP*) each cycle in the buses (B.c) connected to the two halves of the synchronisation unit (USU) as desired, and to start a bus arbitration again whenever the two computers (L, R) are assigned (BW*, BB*) to different processors (P) acting as bus masters;
- the communications channel permits the transmission of data, addresses and control signals from one common bus to the other and vice versa.

2. Computer arrangement according to Claim 1, characterised by the following features:
- the communications channel has two unidirectional subchannels for the bidirectional transmission of data, addresses and control signals;
- a comparator which is connected in each case to the two subchannels is provided in the two halves of the synchronisation unit;
- buffers (1, 2, ..., 8) are provided in the two subchannels, via which buffers the data, addresses and control signals of a common bus (B.c) can be switched through selectively to the comparators or to the respective other bus when required.

3. Computer arrangement according to Claim 2, characterised by the following features:
- a local controller and a remote controller are provided in each half of the synchronisation unit (USU);
- the local controller of each half of the synchronisation unit handles in each case the control of processes on the common bus to which the respective half is connected;
- the remote controller serves to transmit the status of the half of the synchronisation unit to which it is assigned to the respective other half;
- the possible statuses of the two halves of the synchronisation unit are derived from the statuses of a plurality of registers provided in the two halves in each case.

4. Computer arrangement according to one of Claims 1 - 3, characterised by the following features:
- all the data transmitted via the buses (B.c) from all units connected to them, such as the processors (P), the input and output device (EA.c) and the memory (M.c), can be received in both computers (L, R);
- the duration of the bus cycles is determined in both computers (L, R) by the slowest participating unit in each case;
- the synchronisation unit (USU) delays each bus cycle until the same bus cycle also occurs on the bus of the respective other computer.

5. Computer arrangement according to one of Claims 1 - 3, characterised by the following features:
- the access authorisation to the common bus (B.c) is determined by an arbitration procedure;
- the identity of the respective winner of an arbitration procedure is transmitted via lines of the common bus (B.c) in each case;
- the respective winner can be discontinued within a specifiable time span after arbitration has ended, and a repeat of the arbitration procedure can be forced;
- the synchronisation unit (USU) compares in each case the identity of the winners of parallel arbitrations on the buses (B.c) of the two computers (L, R) and again discontinues these in each case and again forces a new arbitration in each case if their identity is not identical.

6. Computer arrangement according to one of Claims 1 - 3, characterised by the following features:
- for at least one unit, designed as input device (EA.c), in each of the computers there is a corresponding unit, likewise designed as input device (EA.c), in the respective other computer, but with a different address;
- if one of two mutually corresponding input devices (EA.c) is simultaneously addressed in the two computers (L, R), then the synchronisation unit (USU) transfers the data supplied by the aforesaid input device (EA.c) on the bus (B.c) to which it is connected across to the bus of the other computer.

7. Computer arrangement according to one of Claims 1 - 3, characterised by the following features:
- the processors (P) can be interrupted by an interrupt request;
- there is present in each processor (P) an interrupt unit (ZZ, UR) which has a cycle selector (ZZ) and an interrupt register (UR) that can be read from the common bus (B.c) in each case;
- the processors (P) recognize only interrupt requests generated by their associated cycle selectors (ZZ);
- all other interrupt requests do not lead directly to an interrupt, but rather are stored in the interrupt register (UR) in each case;
- the interrupt registers (UR) of mutually corresponding processors (P) in the two computers (L, R) have a different address;
- the cycle counters (ZZ) interrupt their associated processors (P) in each case after a predetermined number of cycles in each case;
- the interrupted processors (P) read the contents of their associated interrupt registers (UR) via the common bus (B.c), to which they are connected in each case, and also in addition read the contents of the interrupt registers (UR) of the respective processors (P) corresponding to them in the other computer via the common bus of the respective other computer;
- to permit the last-mentioned read operation, the synchronisation unit (USU) connects the common buses (B.c) of the two computers (L, R) to one another for the duration of the read operation;
- read, mutually corresponding interrupt requests are aligned with one another in the two computers (L, R) in the same way.

8. Computer arrangement according to one of Claims 1 - 3, characterised by the following features:
- if one computer (pupil) has failed and if it is to be put into operation again, the respective corresponding processors in the two computers are set in pairs to the same program address;
- the failed computer (pupil) is set to a learning mode and the non-failed computer is set to a teaching mode;
- the I/O devices (EA.c, EA.p) and the memories (M.I; M.c, M.p) of a computer in the learning mode ignore all learn requests;
- the data appearing as a result of the read requests on the common bus (B.c) of the computer (teacher) in the teaching mode are transferred by the synchronisation unit (USU) across to the common bus (B.c) of the computer in the learning mode;
- the computer in the teaching mode gradually reads all address items of its memories via its common bus parallel to the execution of its normal program;
- the synchronisation unit transfers the data across to the bus of the computer in the learning mode also in the case of the last-mentioned read operations.

9. Computer arrangement according to one of Claims 1 - 3, characterised by the following features:
- all the data transmitted over the buses (B.c) from all units connected to them, such as processors (P), input and output device (EA.c) and memory (M.c), can be received in both computers (L, R);
- the duration of the bus cycles is determined in both computers (L, R) by the slowest participating unit in each case;
- the synchronisation unit (USU) delays each bus cycle until the same bus cycle also occurs on the bus of the respective other computer;
- two mutually corresponding processors (P) in the two computers (L, R) which wish to execute non-deterministic operations notify the synchronisation unit (USU) of this;
- after these messages have been received, the synchronisation unit (USU) does not synchronise the bus cycles of the aforesaid processors (P);
- as soon as one of the two aforesaid, no longer synchronised, processors is ready to be resynchronised, it signals this to the synchronisation unit and goes into a wait loop until the corresponding processor in the other computer also signals its readiness for resynchronisation and likewise goes into a wait loop;
- when the aforesaid processors are ready for resynchronisation in this way, the synchronisation unit sends them an interrupt request simultaneously, in each case causing the processors to exit their wait loops and to continue resynchronised as normal.

10. Computer arrangement according to one of Claims 1 - 3, characterised by the following features:
- if only one of the computers (L) is working, while the other (R) is waiting for the completion of the work, the common memory (M.c) of the waiting computer (R) is updated by the synchronisation unit (USU) in that the synchronisation unit (USU) transfers the data that are written via the bus (B.c) of the working computer (L) into the common memory (M.c) of the working computer (L) across to the bus (B.c) of the waiting computer (R).

## Revendications

1. Un agencement d'ordinateurs insensible aux défaillances, basé sur le principe du duplex concurrent avec deux ordinateurs (L, R) de construction identique étroitement liés mais séparables dans l'espace qui sont chargés de programmes concordants et qui peuvent être connectés à des voies d'entrée communes ou redondantes et à une voie de sortie commune, caractérisé en ce que:
- dans les deux ordinateurs (L, R) une pluralité de processeurs (P) sont connectés, outre à un dispositif commun d'entrée et de sortie (EA.c) et à une mémoire commune (M.c), à un bus commun (B.c) dans chaque cas;
- ce bus commun (B.c) a la possibilité de notifier chaque élément d'information qu'il transfère, tel qu'une adresse ou des données de lecture et d'écriture, également à des processeurs (P) autres que les processeurs destinataires;
- une unité de synchronisation (USU) connectée aux bus (B.c) des deux ordinateurs (L, R) est fournie, présentant deux moitiés identiques, chacune d'elles connectée à l'un des bus communs (B.c) et connectées l'une avec l'autre par une voie de transmission;
- l'unité de synchronisation (USU) synchronise les deux ordinateurs (L, R) sans influencer directement les processeurs individuels (P) en ceci qu'elle génère des signaux (RP*, BW* et BB*) dans chacune de ses deux moitiés qui servent à allonger (signal RP*) chaque cycle dans les bus (B.c) connectés à ces deux moitiés de l'unité de synchronisation (USU) comme on le désire, et à recommencer un arbitrage des bus chaque fois que les deux ordinateurs (L, R) sont assignés (BW*, BB*) à des processeurs différents (P) agissant comme maîtres de bus;
- la voie de transmission permet la transmission de données, d'adresses et de signaux de commande depuis l'un des bus communs vers l'autre et vice versa.

2. Un agencement d'ordinateurs selon la revendication 1, caractérisé en ce que:
- la voie de transmission présente deux sous-voies unidirectionnelles pour la transmission bidirectionnelle de données, d'adresses et de signaux de commande;
- un comparateur connecté dans chaque cas aux deux sous-voies est fourni dans les deux moitiés de l'unité de synchronisation;
- des mémoires tampons (1, 2, ..., 8) sont fournies dans les deux sous-voies, par lesquelles les données, adresses et signaux de commande d'un bus commun (B.c) peuvent être commutés de manière sélective aux comparateurs ou à l'autre bus respectif comme il convient.

3. Un agencement d'ordinateurs selon la revendication 2, caractérisé en ce que:
- un contrôleur local et un contrôleur à distance sont fournis dans chaque moitié de l'unité de synchronisation (USU);
- le contrôleur local de chaque moitié de l'unité de synchronisation traite dans chaque cas la commande des procédés sur le bus commun auquel la moitié respective est connectée;
- le contrôleur à distance sert à transmettre l'état de la moitié de l'unité de synchronisation à laquelle il est assigné à l'autre moitié respective;
- les états possibles des deux moitiés de l'unité de synchronisation sont dérivés des états d'une pluralité de registres fournis dans les deux moitiés dans chaque cas.

4. Un agencement d'ordinateurs selon l'une quelconque des revendications 1 à 3, caractérisé en ce que:
- toutes les données transmises par l'intermédiaire des bus (B.c) par toutes les unités qui y sont connectées, telles que les processeurs (P), le dispositif d'entrée et de sortie (EA.c) et la mémoire (M.c), peuvent être reçues dans les deux ordinateurs (L,R);
- la durée des cycles de bus est déterminée dans les deux ordinateurs (L, R) par l'unité participant le plus lentement dans chaque cas;
- l'unité de synchronisation (USU) retarde chaque cycle de bus jusqu'à ce que le même cycle de bus ait lieu également sur le bus de l'autre ordinateur respectif.

5. Un agencement d'ordinateurs selon l'une quelconque des revendications 1 à 3, caractérisé en ce que:
- l'autorisation d'accès au bus commun (B.c) est déterminée par la procédure d'arbitrage;
- l'identité du vainqueur respectif d'une procédure d'arbitrage est transmise par l'intermédiaire des lignes du bus commun (B.c) dans chaque cas;
- le vainqueur respectif peut être interrompu dans les limites d'un laps de temps spécifiable après la fin de l'arbitrage, et une répétition de la procédure d'arbitrage peut être forcée;
- l'unité de synchronisation (USU) compare dans chaque cas l'identité des vainqueurs des arbitrages parallèles sur les bus (B.c) des deux ordinateurs (L, R) et de nouveau les interrompt dans chaque cas et force à nouveau un nouvel arbitrage dans chaque cas si leur identité n'est pas identique.

6. Un agencement d'ordinateurs selon l'une quelconque des revendications 1 à 3, caractérisé en ce que:
- pour au moins une unité, conçue comme dispositif d'entrée (EA.c), dans chacun des ordinateurs, il existe une unité correspondante, elle-même conçue comme dispositif d'entrée (EA.c) dans l'autre ordinateur respectif, mais avec une adresse différente;
- si l'un des dispositifs d'entrée mutuellement correspondants (EA.c) est adressé simultanément dans les deux ordinateurs (L, R), l'unité de synchronisation (USU) transfère alors les données fournies par ledit dispositif d'entrée (EA.c) sur le bus (B.c) auquel elle est connectée au bus de l'autre ordinateur.

7. Un agencement d'ordinateurs selon l'une quelconque des revendications 1 à 3, caractérisé en ce que:
- les processeurs (P) peuvent être interrompus par une demande d'interruption;
- dans chaque processeur (P) existe une unité d'interruption (ZZ, UR) qui a un sélecteur de cycle (ZZ) et un registre d'interruptions (UR) qui dans chaque cas peuvent être lus depuis le bus commun (B.c);
- les processeurs (P) ne reconnaissent que les demandes d'interruption générées par leurs sélecteurs de cycle associés (ZZ);
- toutes les autres demandes d'interruption n'entraînent pas directement une interruption, mais dans chaque cas elles sont stockées dans le registre d'interruptions (UR);
- les registres d'interruptions (UR) des processeurs mutuellement correspondants (P) dans les deux ordinateurs (L, R) ont une adresse différente;
- les compteurs de cycles (ZZ) interrompent leurs processeurs associés (P) dans chaque cas après un nombre prédéterminé de cycles dans chaque cas;
- les processeurs interrompus (P) lisent le contenu de leurs registres d'interruptions associés (UR) par l'intermédiaire du bus commun (B.c) auquel ils sont connectés dans chaque cas, et lisent également le contenu des registres d'interruptions (UR) des processeurs respectifs (P) leur correspondant dans l'autre ordinateur par l'intermédiaire du bus commun de l'autre ordinateur respectif;
- pour permettre la dernière opération de lecture mentionnée, l'unité de synchronisation (USU) connecte les bus communs (B.c) des deux ordinateurs (L, R) l'un avec l'autre durant l'opération de lecture;
- des demandes mutuellement correspondantes d'interruption de lecture sont alignées l'une avec l'autre dans les deux ordinateurs (L, R) de la même façon.

8. Un agencement d'ordinateurs selon l'une quelconque des revendications 1 à 3, caractérisé en ce que:
- si l'un des ordinateurs (élève) présente une défaillance et s'il doit être remis en marche, les processeurs correspondants respectifs dans les deux ordinateurs sont réglés en paires sur la même adresse de programme;
- l'ordinateur défectueux (élève) est réglé sur un mode d'apprentissage et l'ordinateur opérationnel est réglé sur un mode d'enseignement;
- les dispositifs E/S (EA.c, EA.p) et les mémoires (M.I; M.c, M.p) d'un ordinateur en mode d'apprentissage ignorent toutes les demandes d'apprentissage;
- les données produites suite aux demandes de lecture sur le bus commun (B.c) de l'ordinateur (maître) en mode d'enseignement sont transférées par l'unité de synchronisation (USU) au bus commun (B.c) de l'ordinateur en mode d'apprentissage;
- l'ordinateur en mode d'enseignement lit graduellement toutes les adresses de ses mémoires par l'intermédiaire du bus commun parallèlement à l'exécution de son programme normal;
- l'unité de synchronisation transfère les données au bus de l'ordinateur en mode d'apprentissage ainsi que dans le cas des dernières opérations de lecture mentionnées.

9. Un agencement d'ordinateurs selon l'une quelconque des revendications 1 à 3, caractérisé en ce que:
- toutes les données transmises sur les bus (B.c) par toutes les unités qui y sont raccordées, telles que les processeurs (P), le dispositif d'entrée et de sortie (EA.c) et la mémoire (M.c), peuvent être reçues dans les deux ordinateurs (L,R);
- la durée des cycles de bus est déterminée dans les deux ordinateurs (L, R) par l'unité participant le plus lentement dans chaque cas;
- l'unité de synchronisation (USU) retarde chaque cycle de bus jusqu'à ce que le même cycle de bus ait lieu également sur le bus de l'autre ordinateur respectif;
- deux processeurs mutuellement correspondants (P) dans les deux ordinateurs (L, R) qui désirent exécuter des opérations non déterminantes en notifient l'unité de synchronisation (USU);
- après réception de ces messages, l'unité de synchronisation (USU) ne synchronise pas les cycles de bus desdits processeurs (P);
- aussitôt que l'un des deux processeurs précités, maintenant désynchronisés, est prêt à être resynchronisé, il le signale à l'unité de synchronisation et se met en boucle d'attente jusqu'à ce que le processeur correspondant de l'autre ordinateur signale également qu'il est prêt à être resynchronisé et se mette également en bouche d'attente;
- lorsque les processeurs précités sont ainsi prêts à être resynchronisés, l'unité de synchronisation leur envoie simultanément une demande d'interruption, forçant dans chaque cas les processeurs à sortir de leur bouche d'attente et à continuer resynchronisés normalement.

10. Un agencement d'ordinateurs selon l'une quelconque des revendications 1 à 3, caractérisé en ce que:
- Si seulement l'un des ordinateurs (L) fonctionne, tandis que l'autre (R) attend que le travail soit terminé, la mémoire commune (M.c) de l'ordinateur en attente (R) est mise à jour par l'unité de synchronisation (USU) en ceci que l'unité de synchronisation (USU) transfère les données qui sont écrites par l'intermédiaire du bus (B.c) de l'ordinateur opérationnel (L) dans la mémoire commune (M.c) de l'ordinateur opérationnel (L) au bus (B.c) de l'ordinateur en attente (R).
